# EUROPEAN PATENT APPLICATION

(11) **EP 1 947 643 A1**
(43) Date of publication of application: **23.07.2008**
(21) Application number: 06810834.9
(22) Date of filing: 29.09.2006
(51) Int. Cl.: G10L 11/00, G09B 5/06, G09B 19/04, G09B 19/06, G10L 15/00

(54) **PRONUNCIATION DIAGNOSIS DEVICE, PRONUNCIATION DIAGNOSIS METHOD, RECORDING MEDIUM, AND PRONUNCIATION DIAGNOSIS PROGRAM**

(30) Priority: 29.09.2005 JP 2005285217; 26.05.2006 JP 2006147171
(71) Applicant: National Institute of Advanced Industrial Science and Technology, Tokyo 100-8921 (JP); Okumura, Machi, Tsukuba-shi Ibaraki 305-0045 (JP)
(72) Inventor: OKUMURA, Machi, Tsukuba-shi Ibaraki 305-0045 (JP); KOJIMA, Hiroaki, Tsukuba-shi Ibaraki 305-8568 (JP); OMURA, Hiroshi, Tsukuba-shi Ibaraki 305-8568 (JP)
(74) Representative: KEIL & SCHAAFHAUSEN Patentanwälte
(86) International application number: PCT/JP2006/319428
(87) International publication number: WO 2007/037356

(57) **Abstract**

A pronunciation diagnosis device according to the present invention diagnoses the pronunciation of a speaker using articulatory attribute data including articulatory attribute values corresponding to an articulatory attribute of a desirable pronunciation for each phoneme in each audio language system, the articulatory attribute including any one condition of the tongue in the oral cavity, the lips, the vocal cord, the uvula, the nasal cavity, the teeth, and the jaws, or a combination including at least one of the conditions of the articulatory organs; the way of applying force in the conditions of articulatory organs; and a combination of breathing conditions; extracting an acoustic feature from an audio signal generated by a speaker, the acoustic feature being a frequency feature quantity, a sound volume, and a duration time, a rate of change or change pattern thereof, and at least one combination thereof; estimating an attribute value associated with the articulatory attribute on the basis of the extracted acoustic feature; and comparing the estimated attribute value with the desirable articulatory attribute data.

## Description

### Technical Field

The present invention relates to a pronunciation diagnosis device, a pronunciation diagnosis method, a recording medium, and a pronunciation diagnosis program.

### Background Art

As a pronunciation diagnosis device for diagnosing the pronunciation of a speaker, there is a known device that acquires an audio signal associated with a word pronounced by the speaker, retrieves a word having a spelling that exhibits the highest correspondence with the audio signal from a database, and provides the retrieved word to the speaker (for example, refer to Patent Document 1).
Patent Document 1: Japanese Unexamined Patent Application Publication No. 11-202889

### Disclosure of Invention

### Problem to be Solved by the Invention

Since the above-described pronunciation diagnosis device diagnoses a pronunciation by linking the sound of the word pronounced by a speaker to the spelling of the word, it cannot diagnose whether a word is pronounced with correct conditions of articulatory organs and correct articulatory modes, for each phoneme in the word.

An object of the present invention is to provide a pronunciation diagnosis device, a method of diagnosing pronunciation, and a pronunciation diagnosis program that can diagnose whether or not the conditions of articulatory organs and the articulatory modes for the pronunciation are correct and to provide a recording medium for storing articulatory attribute data used therefor.

### Means for Solving Problems

A pronunciation diagnosis device according to an aspect of the present invention includes articulatory attribute data including articulatory attribute values corresponding to an articulatory attribute of a desirable pronunciation for each phoneme in each audio language system, the articulatory attribute including any one condition of articulatory organs selected from the height, position, shape, and movement of the tongue, the shape, opening, and movement of the lips, the condition of the glottis, the condition of the vocal cord, the condition of the uvula, the condition of the nasal cavity, the positions of the upper and lower teeth, the condition of the jaws, and the movement of the jaws, or a combination including at least one of the conditions of the articulatory organs; the way of applying force in the conditions of articulatory organs; and a combination of breathing conditions; extracting means for extracting an acoustic feature from an audio signal generated by a speaker, the acoustic feature being a frequency feature quantity, a sound volume, and a duration time, a rate of change or change pattern thereof, and at least one combination thereof; attribute-value estimating means for estimating an attribute value associated with the articulatory attribute on the basis of the extracted acoustic feature; and diagnosing means for diagnosing the pronunciation of the speaker by comparing the estimated attribute value with the desirable articulatory attribute data.

It is preferable that the above-described pronunciation device further include outputting means for outputting a pronunciation diagnosis result of the speaker.

A pronunciation diagnosis device according to another aspect of the present invention includes acoustic-feature extracting means for extracting an acoustic feature of a phoneme of a pronunciation, the acoustic feature being a frequency feature quantity, a sound volume, a duration time, a rate of change or change pattern thereof, and at least one combination thereof; articulatory-attribute-distribution forming means for forming a distribution, for each phoneme in each audio language system, according to the extracted acoustic feature of the phoneme, the distribution being formed of any one of the height, position, shape, and movement of the tongue, the shape, opening, and movement of the lips, the condition of the glottis, the condition of the vocal cord, the condition of the uvula, the condition of the nasal cavity, the positions of the upper and lower teeth, the condition of the jaws, and the movement of the jaws, a combination including at least one of the conditions of these articulatory organs, the way of applying force during the conditions of these articulatory organs, or a combination of breathing conditions; and articulatory-attribute determining means for determining an articulatory attribute categorized by the articulatory-attribute-distribution forming means on the basis of a threshold value.

A pronunciation diagnosis device according to another aspect of the present invention includes acoustic-feature extracting means for extracting an acoustic feature of phonemes of similar pronunciations, the acoustic feature being a frequency feature quantity, a sound volume, and a duration time, a rate of change or change pattern thereof, and at least one combination thereof; first articulatory-attribute-distribution forming means for forming a first distribution, for each phoneme in each audio language system, according to the extracted acoustic feature of one of the phonemes, the first distribution being formed of any one of the height, position, shape, and movement of the tongue, the shape, opening, and movement of the lips, the condition of the glottis, the condition of the vocal cord, the condition of the uvula, the condition of the nasal cavity, the positions of the upper and lower teeth, the condition of the jaws, and the movement of the jaws, or a combination including at least one of the conditions of these articulatory organs, the way of applying force during the conditions of these articulatory organs, or a combination of breathing conditions as articulatory attributes for pronouncing the one of phonemes; second articulatory-attribute-distribution forming means for forming a second distribution according to the extracted acoustic feature of the other of the phonemes by a speaker, the second distribution being formed of any one of the height, position, shape, and movement of the tongue, the shape, opening, and movement of the lips, the condition of the glottis, the condition of the vocal cord, the condition of the uvula, the condition of the nasal cavity, the positions of the upper and lower teeth, the condition of the jaws, and the movement of the jaws, a combination including at least one of the conditions of these articulatory organs, the way of applying force during the conditions of these articulatory organs, or a combination of breathing conditions; first articulatory-attribute determining means for determining an articulatory attribute categorized by the first articulatory-attribute-distribution forming means on the basis of a first threshold value; and second articulatory-attribute determining means for determining an articulatory attribute categorized by the second articulatory-attribute-distribution forming means on the basis of a second threshold value.

It is preferable that the above-described pronunciation device further include threshold-value changing means for changing the threshold value.

In the above-described pronunciation device, it is preferable that the phoneme comprise a consonant.

A method of diagnosing pronunciation according to another aspect of the present invention includes an extracting step of extracting an acoustic feature from an audio signal generated by a speaker, the acoustic feature being a frequency feature quantity, a sound volume, and a duration time, a rate of change or change pattern thereof, and at least one combination thereof; an attribute-value estimating step of estimating an attribute value associated with the articulatory attribute on the basis of the extracted acoustic feature; a diagnosing step of diagnosing the pronunciation of the speaker by comparing the estimated attribute value with articulatory attribute data including articulatory attribute values corresponding to an articulatory attribute of a desirable pronunciation for each phoneme in each audio language system, the articulatory attribute including any one condition of articulatory organs selected from the height, position, shape, and movement of the tongue, the shape, opening, and movement of the lips, the condition of the glottis, the condition of the vocal cord, the condition of the uvula, the condition of the nasal cavity, the positions of the upper and lower teeth, the condition of the jaws, and the movement of the jaws, or a combination including at least one of the conditions of the articulatory organs; the way of applying force in the conditions of articulatory organs; and a combination of breathing conditions as articulatory attributes for pronouncing the phoneme; and an outputting step of outputting a pronunciation diagnosis result of the speaker.

A method of diagnosing pronunciation according to another aspect of the present invention includes an acoustic-feature extracting step of extracting at least one combination of an acoustic feature of a phoneme of a pronunciation, the acoustic feature being a frequency feature quantity, a sound volume, a duration time, and a rate of change or change pattern thereof; an articulatory-attribute-distribution forming step of forming a distribution, for each phoneme in each audio language system, according to the extracted acoustic feature of the phoneme, the distribution being formed of any one of the height, position, shape, and movement of the tongue, the shape, opening, and movement of the lips, the condition of the glottis, the condition of the vocal cord, the condition of the uvula, the condition of the nasal cavity, the positions of the upper and lower teeth, the condition of the jaws, and the movement of the jaws, a combination including at least one of the conditions of these articulatory organs, the way of applying force during the conditions of these articulatory organs, or a combination of breathing conditions as articulatory attributes for pronouncing the phoneme; and an articulatory-attribute determining step of determining an articulatory attribute categorized by the articulatory-attribute-distribution forming means on the basis of a threshold value.

A method of diagnosing pronunciation according to another aspect of the present invention includes an acoustic-feature extracting step of extracting an acoustic feature of phonemes of similar pronunciations, the acoustic feature being a frequency feature quantity, a sound volume, and a duration time, a rate of change or change pattern thereof, and at least one combination thereof; an first articulatory-attribute-distribution forming step of forming a first distribution, for each phoneme in each audio language system, according to the extracted acoustic feature of one of the phonemes, the first distribution being formed of any one of the height, position, shape, and movement of the tongue, the shape, opening, and movement of the lips, the condition of the glottis, the condition of the vocal cord, the condition of the uvula, the condition of the nasal cavity, the positions of the upper and lower teeth, the condition of the jaws, and the movement of the jaws, or a combination including at least one of the conditions of these articulatory organs, the way of applying force during the conditions of these articulatory organs, or a combination of breathing conditions as articulatory attributes for pronouncing the one of phonemes; a second articulatory-attribute-distribution forming step of forming a second distribution according to the extracted acoustic feature of the other of the phonemes by a speaker, the second distribution being formed of any one of the height, position, shape, and movement of the tongue, the shape, opening, and movement of the lips, the condition of the glottis, the condition of the vocal cord, the condition of the uvula, the condition of the nasal cavity, the positions of the upper and lower teeth, the condition of the jaws, and the movement of the jaws, a combination including at least one of the conditions of these articulatory organs, the way of applying force during the conditions of these articulatory organs, or a combination of breathing conditions; a first articulatory-attribute determining step of determining an articulatory attribute categorized by the first articulatory-attribute-distribution forming means on the basis of a first threshold value; and a second articulatory-attribute determining step of determining an articulatory attribute categorized by the second articulatory-attribute-distribution forming means on the basis of a second threshold value.

It is preferable that the above-described method of diagnosing pronunciation further include a threshold-value changing step of changing the threshold value.

A recording medium, according to another aspect of the present invention, stores, for each audio language system, at least one of an articulatory attribute database including articulatory attributes of each phoneme constituting the audio language system, a threshold value database including threshold values for estimating an articulatory attribute value, a word-segment composition database, a feature axis database, and a correction content database.

According to the present invention, the condition of articulatory organs and the conditions of the articulatory mode, i.e., the conditions of articulatory attribute, are estimated. Therefore, according to the present invention, it is possible to diagnose whether or not the condition of articulatory organs and the articulatory mode for the pronunciation are correct.

According to the above-described configuration, a method of pronouncing with correct condition of articulatory organs and correct articulatory modes can be provided to a speaker.

### Advantages

Since the device, method, recording medium, and program according to the present invention are used to diagnose a pronunciation by linking the sound of the word pronounced by a speaker to the spelling of the word, each phoneme in the word can be diagnosed on the basis of the whether the word is pronounced with correct conditions of articulatory organs and correct articulatory modes. Accordingly, pronunciation with correct conditions of articulatory organs and correct articulatory modes can be instructed to a speaker using the device, method, recording medium, and program according to the present invention.

### Brief Description of Drawings

- Fig. 1: illustrates the configuration of a computer that operates as a pronunciation diagnosis device according to an embodiment of the present invention.
- Fig. 2: illustrates the configuration of a pronunciation diagnosis system.
- Fig. 3: illustrates the process flow of a pronunciation diagnosis program.
- Fig. 4: illustrates the process of creating a database for the pronunciation diagnosis system.
- Fig. 5: illustrates the configuration of a database preparation system of the pronunciation diagnosis system.
- Fig. 6: illustrates examples of categories.
- Fig. 7: illustrates an example of a record of a word-segment composition database.
- Fig. 8: illustrates an example of a record of an articulatory attribute database.
- Fig. 9: illustrates an example of a record of a feature axis database.
- Fig. 10: illustrates an example of a record of a correction content database.
- Fig. 11: illustrates an exemplary distribution of articulatory attributes.
- Fig. 12: illustrates an exemplary distribution of articulatory attributes used for identifying the differences among phonemes "s", "sh", and "th".
- Fig. 13: illustrates the conditions of articulatory organs when pronouncing the phonemes "s" and "th".
- Fig. 14: illustrates an exemplary distribution of articulatory attributes used for identifying the differences between phonemes "s" and "sh".
- Fig. 15: illustrates the conditions of articulatory organs when pronouncing the phonemes "s" and "sh".
- Fig. 16: illustrates the configuration of an audio-signal analyzing unit.
- Fig. 17: illustrates the configuration of a signal processing unit.
- Fig. 18: illustrates the configuration of an audio segmentation unit.
- Fig. 19: illustrates the configuration of an acoustic-feature-quantity extracting unit.
- Fig. 20: illustrates the process flow of an articulatory-attribute estimating unit.
- Fig. 21: illustrates the process flow of each evaluation category.
- Fig. 22: illustrates an exemplary display of a diagnosis result.
- Fig. 23: illustrates an exemplary display of a diagnosis result.
- Fig. 24: illustrates an exemplary display of a correction method.

### Reference Numerals

- 10: pronunciation diagnosis device
- 20: pronunciation diagnosis system
- 22: interface control unit
- 24: audio-signal analyzing unit
- 26: articulatory-attribute estimating unit
- 28: articulatory attribute database
- 30: word-segment composition database
- 32: threshold value database
- 34: feature axis database
- 36: correction-content generating unit
- 38: pronunciation determining unit
- 40: correction content database

### Best Mode for Carrying Out the Invention

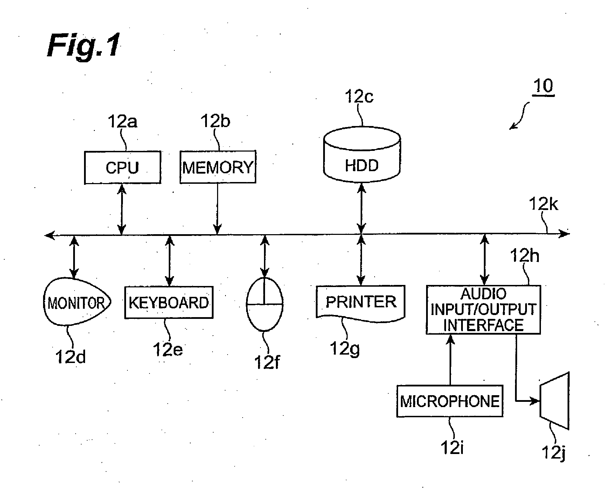

Preferable embodiments of the present invention will be described in detail below with reference to the drawings. Fig. 1 illustrates the configuration of a computer that operates as a pronunciation diagnosis device according to an embodiment of the present invention. The pronunciation diagnosis device 10 is a general-purpose computer that operates according to a pronunciation diagnosis program, which is described below.

As shown in Fig. 1, the computer, operating as the pronunciation diagnosis device 10, includes a central processing unit (CPU) 12a, a memory 12b, a hard disk drive (HDD) 12c, a monitor 12d, a keyboard 12e, a mouse 12f, a printer 12g, an audio input/output interface 12h, a microphone 12i, and a speaker 12j.

The CPU 12a, the memory 12b, the hard disk drive 12c, the monitor 12d, the keyboard 12e, the mouse 12f, the printer 12g, and the audio input/output interface 12h are connected to one another via a system bus 12k. The microphone 12i and the speaker 12j are connected to the system bus 12k via the audio input/output interface 12h.

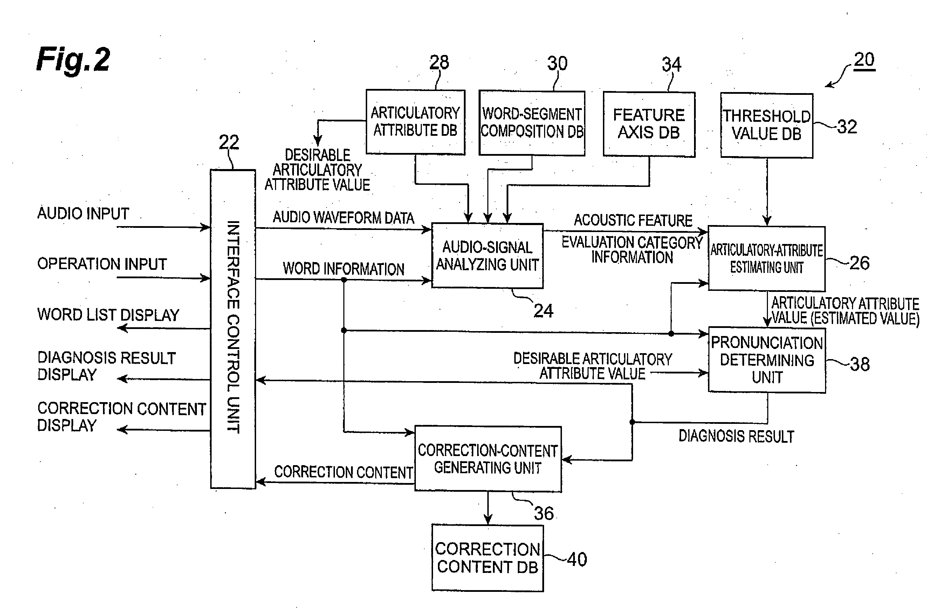

The pronunciation diagnosis system for operating a computer as the pronunciation diagnosis device 10 will be described below. Fig. 2 illustrates the configuration of the pronunciation diagnosis system. The pronunciation diagnosis system 20, shown in Fig. 2, includes an interface control unit 22, an audio-signal analyzing unit 24, an articulatory-attribute estimating unit 26, an articulatory attribute database (DB) 28, a word-segment composition database (DB) 30, a threshold value database (DB) 32, a feature axis database (DB) 34, a correction-content generating unit 36, a pronunciation determining unit 38, and a correction content database (DB) 40.

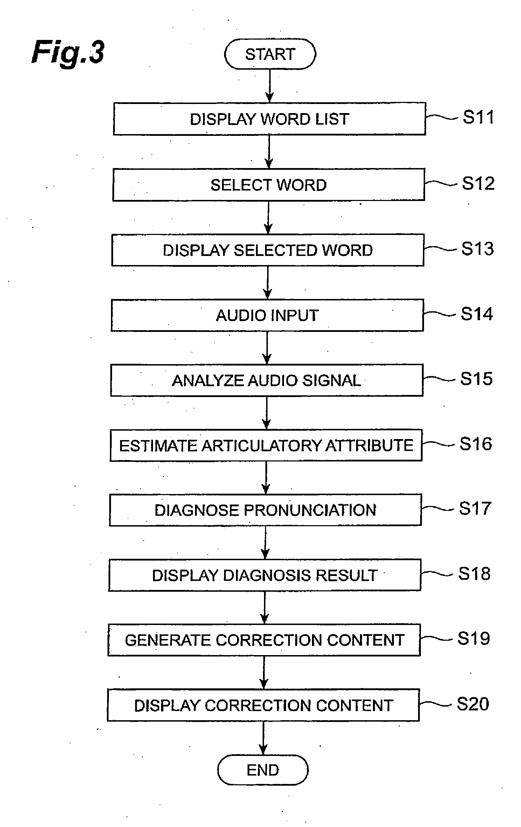

The process flow of pronunciation diagnosis performed by the pronunciation diagnosis device 10 will be described below, in outline, with reference to Fig. 3. In this pronunciation diagnosis, a word for pronunciation diagnosis is selected. To select a word, first a list of words is displayed on the monitor 12d (Step S11). The user selects a word for pronunciation diagnosis from the displayed list of words (Step S12). In this step, the user may instead select a word for pronunciation diagnosis by directly inputting a word, or a word automatically selected at random or sequentially may be used as the word for pronunciation diagnosis.

Next, the selected word is displayed on the monitor 12d (Step S13), and the user pronounces the word toward the microphone 12i (Step S14). This voice is collected by the microphone 12i and is converted to an analog audio signal, and then to digital data at the audio input/output interface 12h. Hereinafter, this digital data is referred to as "audio signal" or "audio waveform data", implying that the waveform of the analog signal is digitalized.

Next, the audio signal is input to the audio-signal analyzing unit 24. The audio-signal analyzing unit 24 uses the articulatory attribute DB 28, the word-segment composition DB 30, and the feature axis DB 34 to extract acoustic features from each phoneme in the pronounced word and outputs these features, together with evaluation category information, to the articulatory-attribute estimating unit 26 (Step S15). The "acoustic features" represent the intensity, loudness, frequency, pitch, formant, and the rate of change thereof, which can be determined from acoustic data including human voice. More specifically, the "acoustic features" represent the amount a frequency feature quantity, a sound volume, and a duration time, a rate of change or change pattern thereof, and at least one combination thereof.

The word displayed on the monitor 12d is used for searching the articulatory attribute DB 28, the word-segment composition DB 30, and the feature axis DB 34. In this specification, the term "word information" is used. When a word includes information about the word class and region (such as the difference between American English and British English), it is referred to as "word information". A simple word (and its spelling) is referred to as "word".

Next, the articulatory-attribute estimating unit 26 uses the acoustic features and the evaluation category information extracted by the audio-signal analyzing unit 24 to estimate an articulatory attribute for each phoneme, and the results are output as articulatory-attribute values (Step S16). The "articulatory attribute" indicates conditions of articulatory organs and the articulatory mode during pronunciation which are phonetically recognized. More specifically, it indicates any one condition of articulatory organs selected from the height, position, shape, and movement of the tongue, the shape, opening, and movement of the lips, the condition of the glottis, the condition of the vocal cord, the condition of the uvula, the condition of the nasal cavity, the positions of the upper and lower teeth, the condition of the jaws, and the movement of the jaws, or a combination including at least one of the conditions of the articulatory organs; the way of applying force in the conditions of articulatory organs; and a combination of breathing conditions. The "articulatory-attribute value" is a numerical value representing the state of the articulatory attribute. For example, a state of the tongue in contact with the palate may be represented by "1" whereas a state of the tongue not in contact with the palate may be represented by "0". Alternatively, the position of the tongue on the narrowed section between the hard palate and the tip of the maxillary teeth may be represented by a value between 0 and 1 (five values, such as "0" for the position of the tongue at the hard palate, "1" at the tip of the maxillary teeth, and "0.25", "0.5", and "0.75" for intermediate positions).

Next, pronunciation is diagnosed according to the articulatory-attribute values, and the diagnostic results are output (Step S 17) and displayed on the monitor 12d by the interface control unit 22 (Step S 18). The correction-content generating unit 36 searches the correction content DB 40 in order to output (Step S19) and display (Step S20) a correction content (characters, a still image, or a moving image) corresponding to the diagnostic results on the monitor 12d by the interface control unit 22.

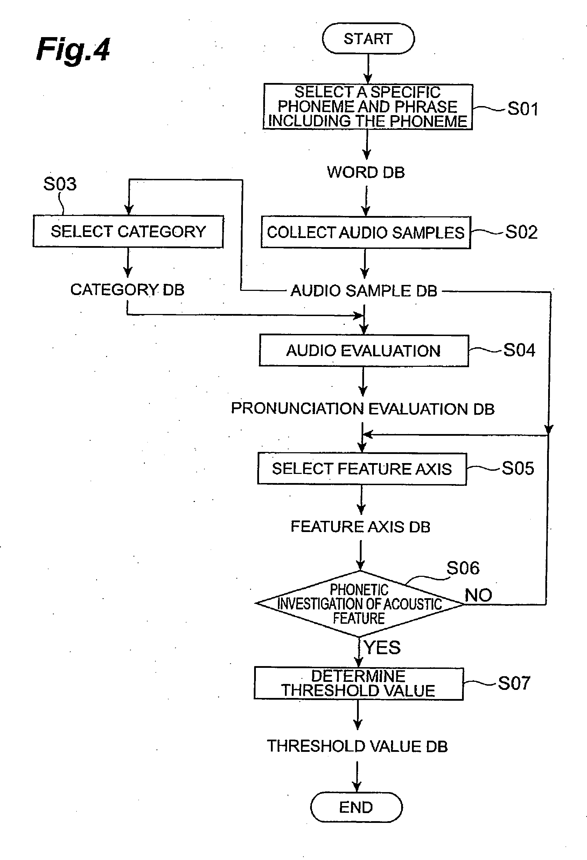

Next, components of the pronunciation diagnosis system 20 will be described in detail. First, the process of creating databases in the pronunciation diagnosis system 20 will be described. Fig. 4 illustrates the process of creating databases in the pronunciation diagnosis system 20.

As shown in Fig. 4, in this creation process, a phoneme to be diagnosed is selected, and a phrase including the phoneme is selected to collect audio samples (Step S01). It is known that a phonetic symbol used in a dictionary may be mouthed as different pronunciations depending on the position of the phoneme in a word, strictly speaking. For example, the phoneme "1", which is one consonant in English, may have different sounds where it is at the beginning, middle, or end of the word, or when there are at least two consecutive consonants (called a "cluster"). In other words, the sound of the phoneme changes depending on the position of the phoneme and the type of the adjacent phoneme. Therefore, even if phonemes are represented by the same phonetic symbol, each phoneme must be treated as a unique phoneme depending on the position of the phoneme and the type of the adjacent phoneme. From such standpoint, specific phonemes and phrases including these phonemes are collected into a word database (DB). Based on this, a word-segment composition DB 30, described below, is created.

Next, audio samples (hereinafter may also be simply referred to as "samples"), which are recordings of the pronunciation of a specific phrase, are collected (Step S02). The audio samples are recordings of the same phrase pronounced by a plurality of speakers and are recorded in accordance with the same criterion, for example, a data format for audio files by staying within the upper and lower limits of the intensity and providing a predetermined silent region before and after the phrase being pronounced. A sample group collected in this way and systematically organized for every speaker and phrase is provided as an audio-sample database (DB).

Next, categories are set based on entries of various types of articulatory attributes (Step S03). In Step S03, a phonetician listens to individual samples recorded in the sample DB and examines pronunciations that differ from the phonetically correct pronunciation. Also, he or she detects and records the condition of the articulatory organ and the attribute of the articulatory mode. In other words, categories of which entries are the condition of the articulatory organ and the articulatory mode that determine the phoneme, i.e., the various articulatory attributes, are defined for any phoneme. For example, for the category "shape of the lips", conditions such as "round" or "not round" are entered.

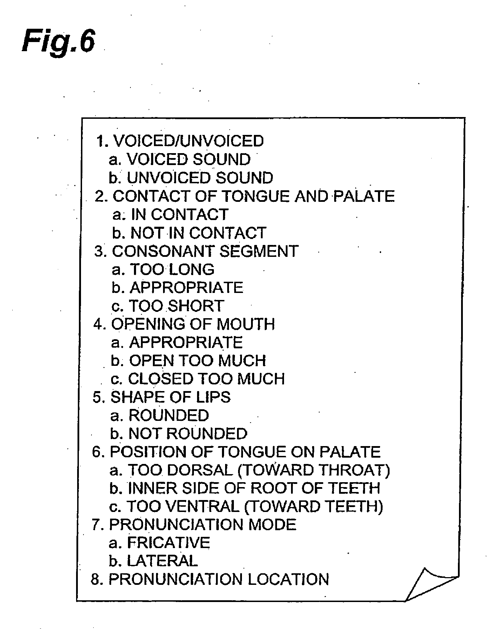

Fig. 6 illustrates examples of categories.

For example, many Japanese people pronounce "lay" and "ray" in the same way. However, from a phonetic standpoint, for example, the phoneme "1", which is a lateral, is a sound pronounced by pushing the tip of the tongue against a section further inward than the root of the teeth, making a voiced sound by pushing air out from both sides of the tongue, and then removing the tip of the tongue from the palate.

When a Japanese person tries to pronounce the phoneme "1", the tongue is put into contact with the palate 2 to 3 mm further in the dorsal direction than the phonetically-defined tongue position, generating a flap, instead of a lateral. This is caused because the tongue position and the pronunciation method used to pronounce "ra, ri, ru, re, ro" in Japanese is incorrectly used for pronouncing English.

In this way, at least one condition of an articulatory organ and an articulatory mode i.e., articulatory attribute (category), is defined for each phoneme. For the phoneme "1", the correct articulatory attributes are "being pronounced as a lateral", "positioning the tongue right behind the root of the teeth", and "being pronounced as a voiced sound".

Investigation of pronunciations of many speakers can determine incorrect articulatory attributes of each phoneme, such as articulatory attributes that do not correspond to any correct condition of articulatory organs or any correct articulatory mode and articulatory attributes that correspond to quite different phonemes. For example, for the phoneme "1", incorrect articulatory attributes include "not being pronounced as a lateral", "being pronounced as a flap, instead of a lateral", "positioning the tongue too far backward", and "being too long/short as a consonant".

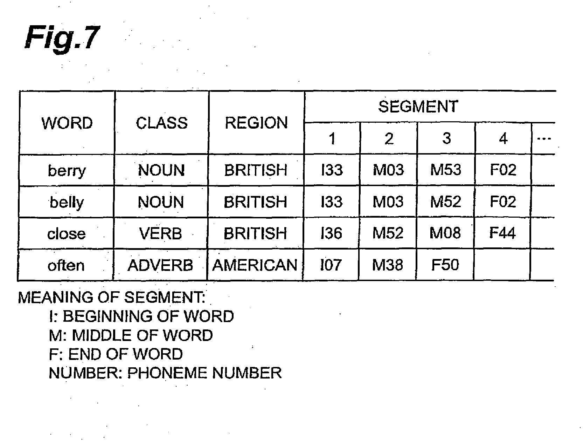

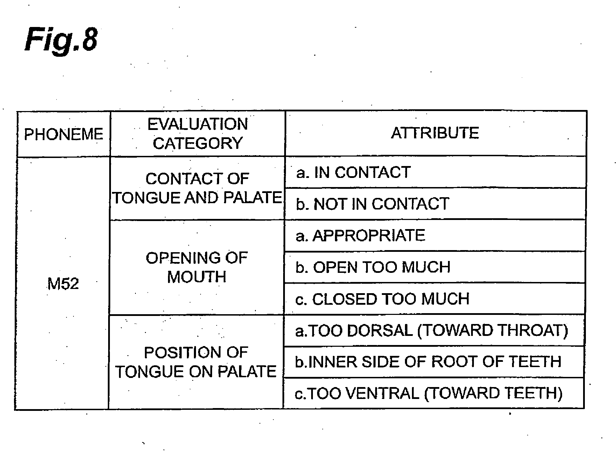

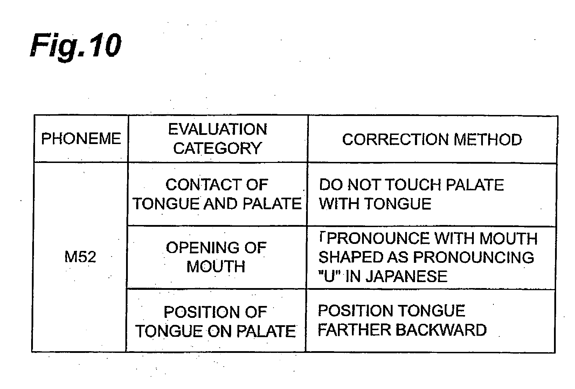

In Step S03, the collection of the defined categories is treated as a category database (DB). As a result, the articulatory attribute DB 28 is created. As shown in Fig 7, at this time, information specifying a phoneme (for example, "M52" in the drawing) is linked to a word and the segments constituting the word and is included in the word-segment composition DB 30, as part of a record. As shown in Fig. 8, information specifying a phoneme is linked to an attribute for each evaluation category corresponding to the phoneme and is included in the articulatory attribute DB 28, as part of a record. As shown in Fig. 10, information specifying a phoneme is linked to contents associated with pronunciation correction methods, which correspond to evaluation categories, to be employed when the pronunciation deviates from desirable attribute values and is included in the correction-content generating unit 36, as part of a record.

Next, the collected audio samples are evaluated on the basis of the categories defined in Step S03, classified into the categories based on phonetics, and recorded (Step S04). In Step S04, the collection obtained by classifying and recording individual audio samples in the audio sample DB is defined as a pronunciation evaluation database (DB).

Next, the sample groups after the audio evaluation in Step S04 are examined to determine a common feature in the acoustic data of the audio samples having the same articulatory attribute (Step S05).

More specifically, in Step S05, audio waveform data included in each audio sample is converted to a time-series of acoustic features, and the time-series is segmented by every phoneme. For example, for the word "berry", it determines the segment corresponding to the pronounced phoneme "r" on the time axis of the audio waveform data.

Furthermore, in Step S05, the acoustic features (for example, formant and power) of the determined segment are combined with at least one item of feature values thereof and data calculated from these values (acoustic feature quantities), such as change rate of the values, and the average in the segment, and two audio sample groups are studied to determine which acoustic features and acoustic feature quantities have a commonality and tendency that can be used to classify both sample groups, in which one sample group is an audio sample group having a combination of correct articulatory attributes of the phoneme of the segment in interest and the other sample group is an audio sample group having at least one articulatory attribute that does not meet any term of the phoneme. Then, a feature axis associated with the articulatory attributes is selected from the acoustic features. The feature axis DB 34 is compiled according to this result.

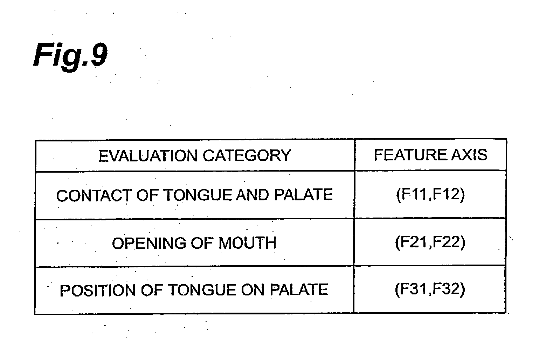

Next, the acoustic features obtained by Step S05 are examined to verify the relationship to the articulatory attributes (Step S06). In other words, through this verification, the articulatory attributes determined on the basis of the acoustic feature quantity of the acoustic feature are compared with the articulatory attributes determined by the phonetician. If the articulatory attributes do not match as a result of the comparison, the process in Step S05 is carried out to select another acoustic feature. As a result, acoustic features corresponding to every evaluation category for every phoneme is collected into the feature axis DB 34. Fig. 9 illustrates an exemplary record in the feature axis DB. As described above, comparison is carried out using articulatory attributes determined by the phonetician. Alternatively, a simple audio evaluation model may be provided for automatic comparison.

Next, a threshold value is set for each acoustic feature that has been confirmed to be valid for determining a specific phoneme in the process of Step S06 (Step S07). The threshold value is not always constant but may be a variable. In such a case, the determination criterion of a determining unit can be changed by varying the registered value in the threshold value DB 32 or by inputting a new threshold value from an external unit. In other words, in Step S07, the threshold value for every feature quantity is determined such that a phoneme has a specific articulatory attribute. Such threshold values are collected into the threshold value DB 32. In other words, threshold values for feature quantities to determine whether phonemes have specific articulatory attributes are registered in the threshold value DB 32.

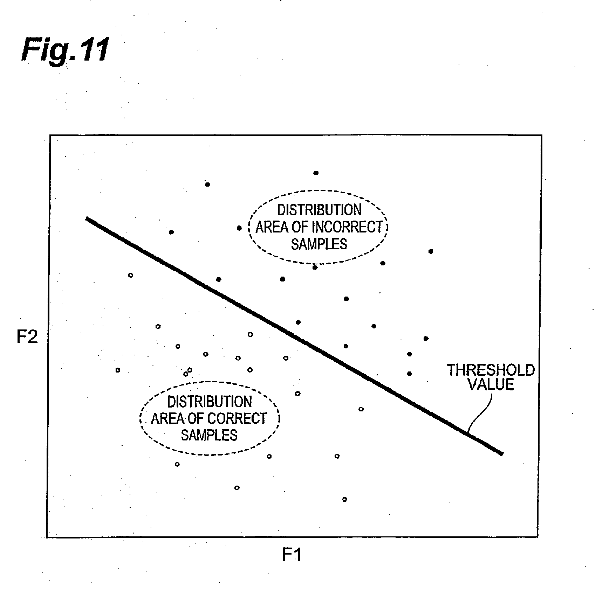

The process of selecting a feature axis (Step S05) illustrated in Fig. 4 will be described in more detail below. Fig. 11 illustrates a distribution of articulatory attributes based on acoustic features of a phoneme that can be used to determine whether an audio sample has the articulatory attribute. In other words, a distribution of articulatory attributes according to a feature quantity F1 associated with duration time and a feature quantity F2 associated with audio power can be used to determine whether the phoneme "1" in the word "belly" is pronounced incorrectly with a flap (i.e., pronounced with a Japanese accent).

Fig. 11 illustrates an example of threshold value determination (Step S07), shown in Fig. 4, in which threshold values are determined by dividing the samples distributed according to feature quantities into two groups by a linear expression. Alternatively, a general determination parameter for a typical determining unit that applies a statistical model to set threshold values can also be used. Depending on the type of articulatory attribute, whether or not a phoneme has the articulatory attribute may be clearly determined by threshold values dividing the samples into two groups or may be determined to be an intermediary zone without clearly dividing the samples into two groups.

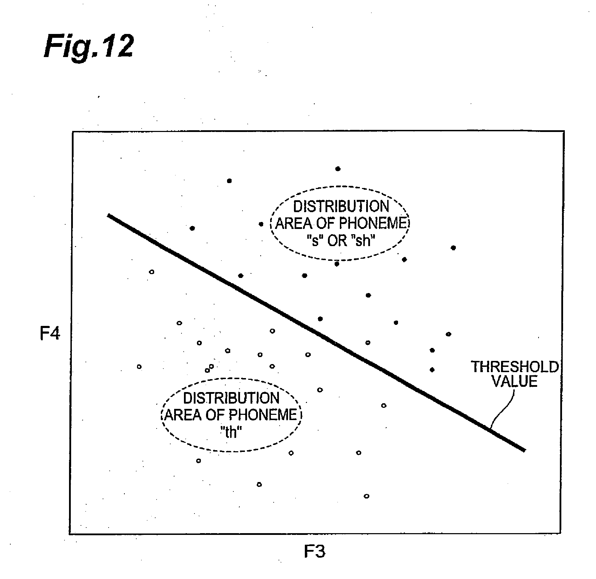

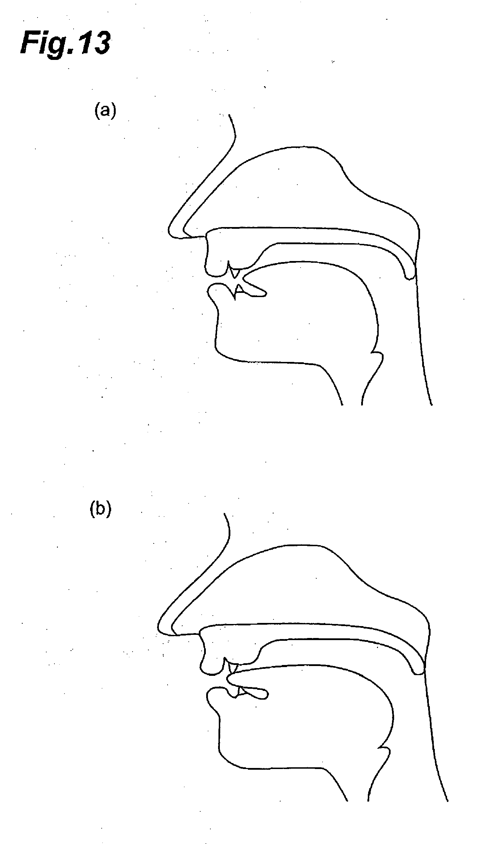

Fig. 12 illustrates an exemplary distribution of articulatory attributes according to a feature quantity F3 associated with duration time and a feature quantity F4 associated with audio power, for articulatory attribute determination based on the difference in the positions of the tongue on the constricted area between the hard palate and the tip of the maxillary teeth. As a result, the difference between the phoneme "th" and the phoneme "s" or "sh" can be determined. Fig. 13 illustrates the conditions of articulatory organs for pronouncing the phoneme "s" and the phoneme "th". Fig. 13(a) illustrates the case for the phoneme "s", whereas Fig. 13(b) illustrates the case for the phoneme "th".

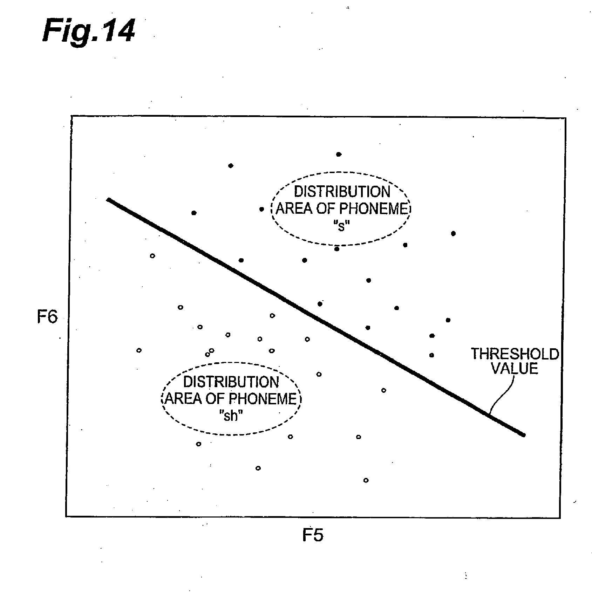

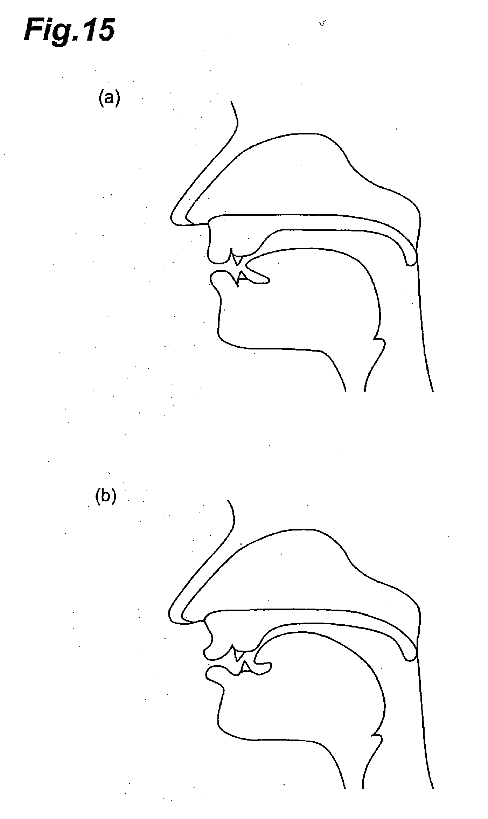

Fig. 14 illustrates a distribution of articulatory attributes according to a feature quantity F5 associated with frequency and a feature quantity F6 associated with frequency, for articulatory attribute determination based on the difference of the constricted sections formed by the tip of the tongue and the palate. As a result, the difference between the phoneme "s" and the phoneme "sh" can be determined. Fig. 15 illustrates the conditions of articulatory organs for pronouncing the phoneme "s" and the phoneme "sh". Fig. 15(a) illustrates the case for the phoneme "s", whereas Fig. 15(b) illustrates the case for the phoneme "sh".

As described above, in order to determine a difference in articulatory attribute among similar phonemes "s", "sh", and "th", a first articulatory attribute distribution is formed according acoustic features of one of entered phonemes. Subsequently, a second articulatory attribute distribution is formed according acoustic features of the other similar phonemes. Then, threshold values corresponding to the articulatory attribute distributions formed can be used to determine whether a phoneme has a desired articulatory attribute. Accordingly, the pronunciation of a consonant can be determined by the above-described method.

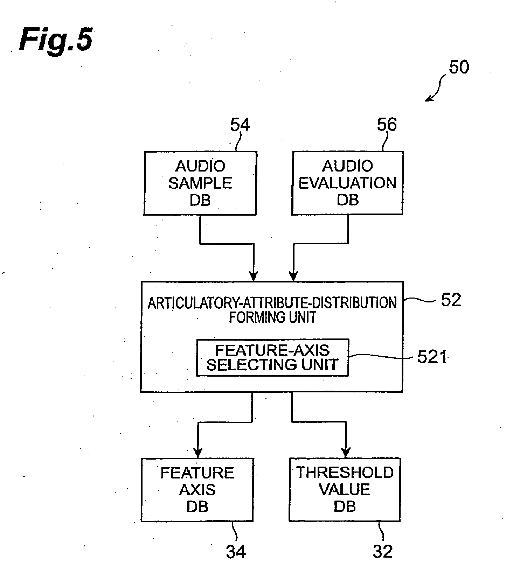

Fig. 5 is a block diagram of a system (database creating system 50) that creates the threshold value DB 32 and the feature axis DB 34 for the pronunciation diagnosis system 20. An audio sample DB 54 and an audio evaluation DB 56 are created in accordance with the database creation process illustrated in Fig. 4. An articulatory-attribute-distribution forming unit 52 having a feature-axis selecting unit 521 carries out the process shown in Fig. 4 to create the threshold value DB 32 and the feature axis DB 34. The database creating system 50 can create a database by independent operation from the pronunciation diagnosis system 20 (offline processing) or may be incorporated into the pronunciation diagnosis system 20 to update the threshold value DB 32 and the feature axis DB 34 (online processing) constantly.

As described above, for each audio language system, at least one of the articulatory attribute DB 28 that contains articulatory attributes for each phoneme constituting the audio language system, the threshold value DB 32 that contains threshold values for estimating articulatory attributes, the word-segment composition DB 30, the feature axis DB 34, and the correction content DB 40 is stored on a recording medium, such as a hard disk or a CD-ROM, whereby these databases are also available for other devices.

Each element of the pronunciation diagnosis system 20 using databases created in this way will be described below.

The interface control unit 22 starts up and controls the subsequent program portion upon reception an operation by the user.

The audio-signal analyzing unit 24 reads in audio waveform data, divides the data into phoneme segments, and outputs features (acoustic features) for each segment. In other words, the audio-signal analyzing unit 24 instructs the computer to function as segmentation means and feature-quantity extraction means.

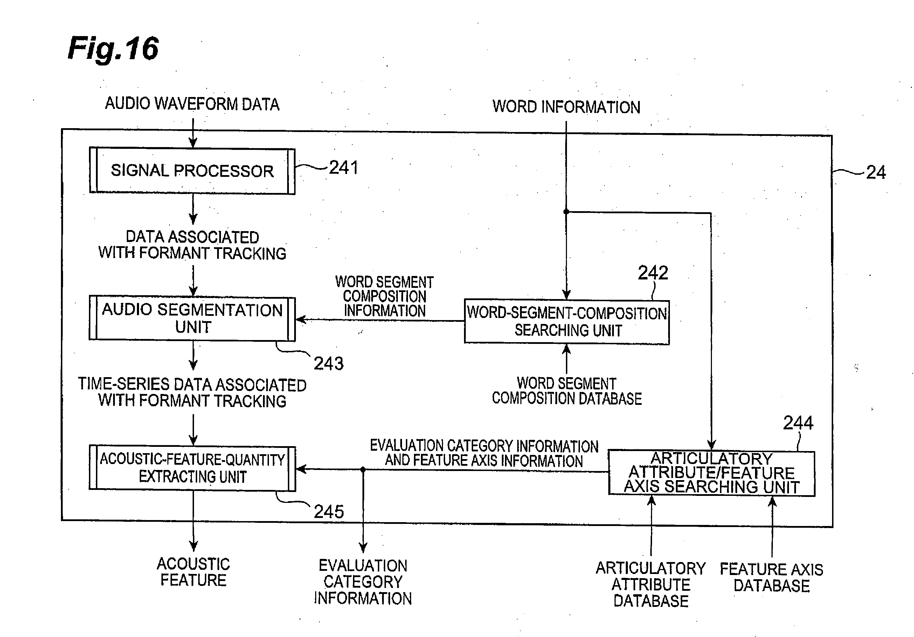

Fig. 16 illustrates the structure of the audio-signal analyzing unit. At a signal processor 241 in the audio-signal analyzing unit 24, an audio signal (audio waveform data) is analyzed at set time intervals and converted to time-series data associated with formant tracking (time-series data such as formant frequency, formant power level, basic frequency, and audio power). Instead of formant tracking, a frequency feature, such as cepstrum, may be used.

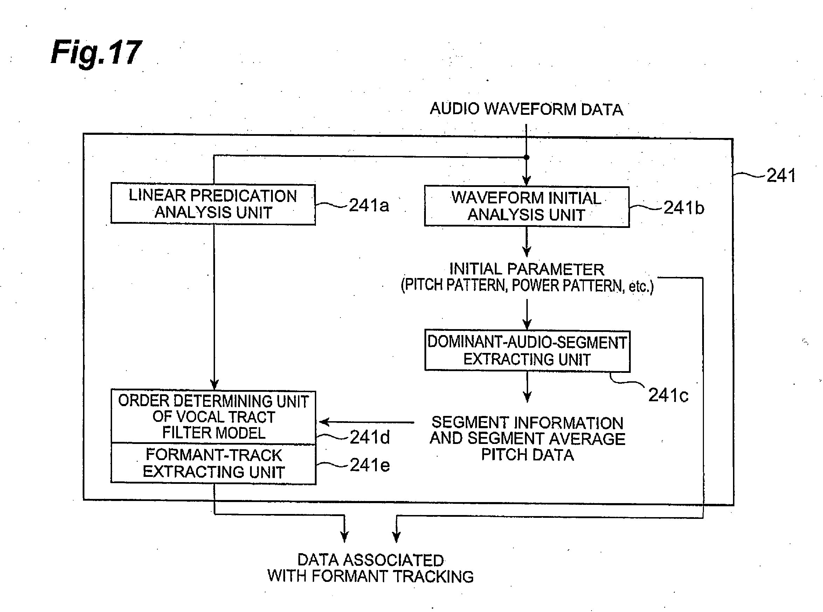

The signal processor 241 will be described in more detail below. Fig. 17 illustrates the configuration of the signal processor 241. As shown in Fig. 17, a linear-prediction-analysis unit 241 a in the signal processor 241 performs parametric analysis of audio waveform data at set time intervals based on an all-pole vocal-tract filter model and outputs a time-series vector of a partial correlation coefficient.

A waveform-initial-analysis unit 241b performs non-parametric analysis by fast Fourier transformation or the like and outputs a time-series of an initial audio parameter (e.g., basic frequency (pitch), audio power, or zero-cross parameter). A dominant-audio-segment extracting unit 241 c extracts a dominant audio segment, which is the base of the word, from the output from the waveform-initial-analysis unit 241b and outputs this together with pitch information.

An order determining unit 241d for the vocal-tract filter model determines the order of the vocal-tract filter from the outputs from the linear-prediction-analysis unit 241 a and the dominant-audio-segment extracting unit 241 c on the basis of a predetermined criterion.

Then, a formant-track extracting unit 241 e calculates the formant frequency, formant power level, and so on using the vocal-tract filter of which the order has been determined and outputs these together with the basic frequency, audio power, and so on as a time-series of the formant-track-associated data.

Referring back to Fig. 16, a word-segment-composition searching unit 242 searches the word-segment composition DB 30 provided in advance for a specific word (spelling) and outputs segment composition information corresponding to the word (segment element sequence, for example, Vb/Vo/Vc/Vo for the word "berry").

Now, the word-segment composition DB 30 will be described. The pronunciation of a word can be acoustically classified into a voiced sound or an unvoiced sound. Moreover, the pronunciation of a word can be divided into segments having acoustically unique features. The acoustic features of segments can be categorized as below.
(1) Categories of voiced sounds:
   Consonant with intense constriction (Vc)
   Consonant and vowel without intense constriction (Vo)
   Voiced plosive (Vb)
(2) Categories of unvoiced sounds:
   Unvoiced plosive (Bu)
   Other unvoiced sounds (Vl)
(3) Inter-sound silence (Sl)

Segments of a word according to the above categories form a word segment composition. For example, the word "berry" has a segment composition of Vb/VoNcNo according to the above categories.

The word-segment composition DB 30 is a database that lists such segment compositions for every word. Hereinafter, word segment composition data retrieved from this database is referred to as "word-segment composition information".

The word-segment-composition searching unit 242 retrieves word segment composition information for a selected word from the word-segment composition DB 30 and outputs this information to an audio segmentation unit 243.

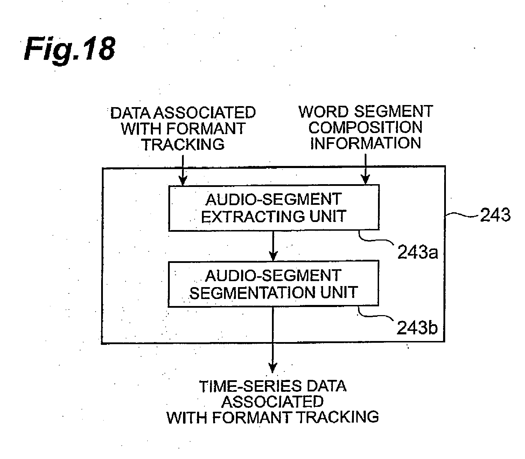

The audio segmentation unit 243 segments the output (time-series data associated with formant tracking) from the signal processor 241 on the basis of the output (word-segment composition information) from the word-segment-composition searching unit 242. Fig. 18 illustrates a configuration of the audio segmentation unit 243.

In the audio segmentation unit 243, an audio-region extracting unit 243a extracts an audio region in the time-series data associated with formant tracking on the basis of the word-segment composition information from the word-segment-composition searching unit 242. This audio region includes audio regions that are present on both sides of the output region from the signal processor 241 and that do not have a pitch period, such as unvoiced and plosive sound.

An audio-region segmentation unit 243b repeats the segmentation process as many times as required on the basis of the output (audio region) and word segment composition information from the audio-region extracting unit 243a and outputs the result as data associated to time-segment formant tracking.

In Fig. 16, an articulatory attribute/feature axis searching unit 244 outputs evaluation category information and feature axis information (which may include a plurality of acoustic-feature-axis information items) corresponding to determination items of an input word (spelling) to an acoustic-feature-quantity extracting unit 245. This evaluation category information is also output to a subsequent articulatory-attribute estimating unit 26.

The acoustic-feature-quantity extracting unit 245 extracts acoustic features necessary for diagnosing the input audio signal from the output (data associated to time-segment formant tracking) from the audio segmentation unit 243 and the output (evaluation category information and feature axis information) from the articulatory attribute/feature axis searching unit 244 and outputs the acoustic features to the subsequent articulatory-attribute estimating unit 26.

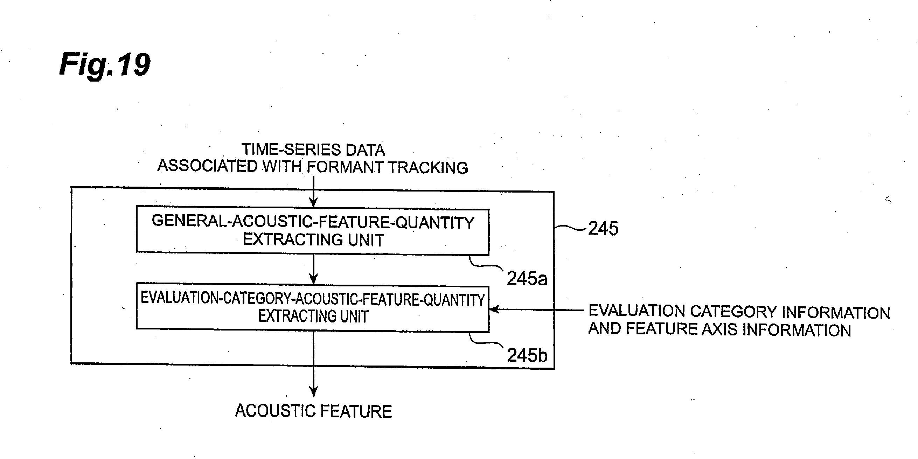

Fig. 19 illustrates a configuration of the acoustic-feature-quantity extracting unit 245. As shown in Fig. 19, in the acoustic-feature-quantity extracting unit 245, a general-acoustic-feature-quantity extracting unit 245a extracts numerical data (general acoustic feature quantities) for acoustic features common to every segment, such as the formant frequency and the formant power level of every segment.

An evaluation-category-acoustic-feature-quantity extracting unit 245b extracts acoustic feature quantities for each evaluation category that are dependent on the word, corresponding to the number of required categories, on the basis of the evaluation category information output from the articulatory attribute/feature axis searching unit 244.

The output of the acoustic-feature-quantity extracting unit 245 is a data set of these two types of acoustic feature quantities corresponding to the articulatory attributes and is sent to the subsequent articulatory-attribute estimating unit 26.

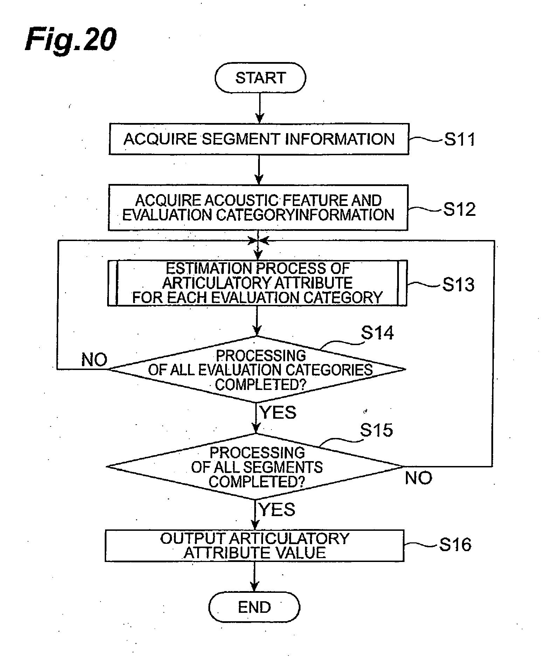

Fig. 20 illustrates the process flow of the articulatory-attribute estimating unit 26. As shown in Fig. 16, the articulatory-attribute estimating unit 26 acquires segment information (a data series specifying phonemes, as shown in Fig. 7) for each word from the word-segment composition DB 30 (Step S11) and acquires evaluation category information (see Fig. 8) assigned to each phonemic segment from the audio-signal analyzing unit 24 (Step S12). For example, for the word "belly", the data series I33, M03, M52, F02 specifying the phonemes are acquired as segment information. Furthermore, for example, for the segment information M52, the following sets of evaluation category information is acquired: "contact of the tip of the tongue and the palate", "opening of the mouth", and "the position of the tip of the tongue on the palate".

Next, the articulatory-attribute estimating unit 26 acquires the acoustic features for each word from the audio-signal analyzing unit 24 (Step S12). For the word "belly", general feature quantities and feature quantities corresponding to the evaluation categories that correspond to I33, M03, M52, and F02.

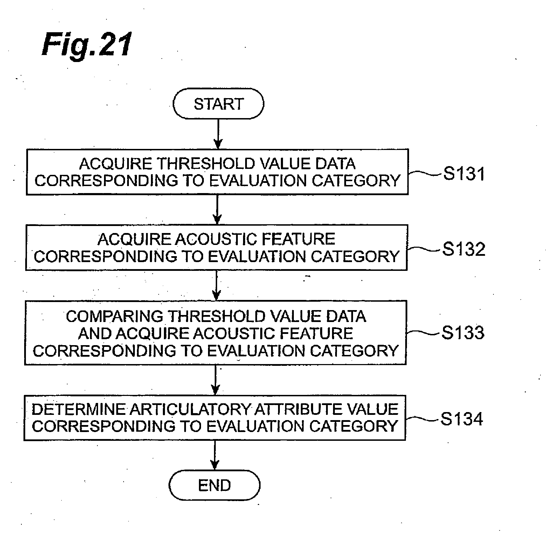

Next, the articulatory-attribute estimating unit 26 estimates the articulatory attributes for each evaluation category (Step S13). Fig. 21 illustrates the process flow for each evaluation category.

In Step S 13, threshold value data corresponding to the evaluation category is retrieved from the threshold value DB 32 (Step S131) and acoustic features corresponding to the evaluation category are acquired (Step S 132). Then, the acquired acoustic features are compared with the threshold value data (Step S133) in order to determine an articulatory attribute value (estimated value) (Step S 134).

After processing for all evaluation categories is carried out (Step S 14), the articulatory-attribute estimating unit 26 processes the subsequent segment. After all segments are processed (Step S15), articulatory attribute values (estimated values) corresponding to all evaluation categories are output (Step S16), and the process is ended. In this way, the articulatory-attribute estimating unit 26 instructs the computer to function as articulatory-attribute estimation means.

As a method of comparison in Step S133, for example, the following method may be employed. Similar to the phonemic articulatory attribute distribution based on acoustic features shown in Fig. 11, the acquired acoustic feature quantities are plotted on a two-dimensional coordinate based on feature axis information (for example, F1 and F2) corresponding to an evaluation category. One side of an area divided by a threshold-value axis obtained from the threshold value data (For example, the linear expression shown in Fig. 11) is defined as a "correct region" and the other side is defined as an "incorrect region". The articulatory attribute value (estimated value) is determined based on which side a point is plotted (for example, "1" for the correct region, and "0" for the incorrect region). Alternatively, the attribute value may be determined using a general determining unit applying a statistical model. Depending on the type of the articulatory attribute, whether or not a plotted point has an articulatory attribute may be determined to be an intermediary value without clearly dividing the plotted points by a threshold value (for example, five values 0, 0.25, 0.5, 0.75, and 1 may be used).

In Fig. 2, articulatory attribute values (estimated values) are output from the articulatory-attribute estimating unit 26 for every evaluation category. Therefore, for example, if the articulatory attribute value (estimated value) for the evaluation category "contact of the tip of the tongue and the palate" for the phoneme "1" of the word "belly" is "1", the determination result "the tongue is in contact with the palate" is acquired, as shown in Fig. 8. Accordingly, the pronunciation determining unit 38 can determine the state of the articulatory attribute from the articulatory attribute value (estimated value). Moreover, by acquiring an articulatory attribute value corresponding to the desirable pronunciation from the articulatory attribute DB 28 and comparing this with the articulatory attribute value (estimated value) output from the articulatory-attribute estimating unit 26, whether the pronunciation is desirable can be determined, and the result is output. For example, as a result of a diagnosis of the pronunciation of the phoneme "r", if the articulatory attribute value (estimated value) for the evaluation category "contact of the tip of the tongue and the palate" is "1" and the articulatory attribute value corresponding to the desirable pronunciation is "0", the output result will be "incorrect" because "the tongue contacts the palate". In this way, the pronunciation determining unit 38 instructs the computer to function as pronunciation diagnosis means.

A message such as that shown in Fig. 8 is displayed on the monitor 12d via the interface control unit 22. For the incorrectly pronounced phoneme, if the diagnosis result for, for example, the evaluation category "contact of the tip of the tongue and the palate" for the phoneme "r" is "incorrect" because "the tongue contacts the palate", the correction-content generating unit 36 refers to the correction content DB 36 and retrieves the message "do not contact the palate with the tongue", as shown in Fig. 10, and then the message is displayed on the monitor 12d via the interface control unit 22. In this way, the correction of the pronunciation is prompted. Accordingly, the interface control unit 22 instructs the computer to function as condition displaying means and correction-method displaying means.

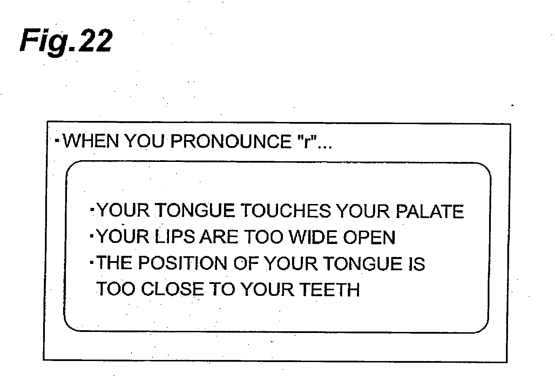

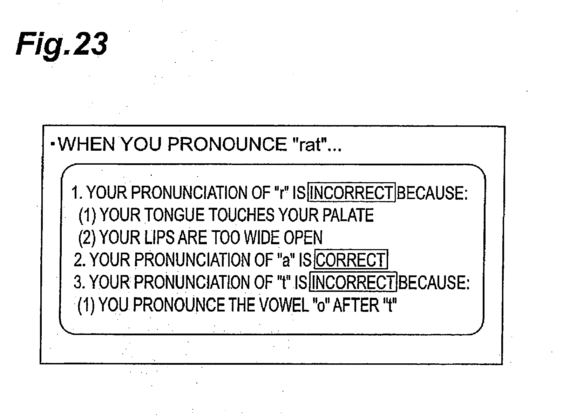

As the detailed example shown in Fig. 22, a method of displaying a diagnosis result may be employed to display every incorrectly pronounced articulatory attribute for an incorrect phoneme or, as shown in Fig. 23, to display each phoneme included in the pronounced word as being correct or incorrect and every incorrectly pronounced articulatory attribute may be displayed for the incorrect phonemes.

As another method, various means for displaying the condition of the articulatory organs using still images, such as sketches and photographs, or moving images, such as animation and video, and for providing instruction using sound (synthesized sound or recorded sound) may be employed.

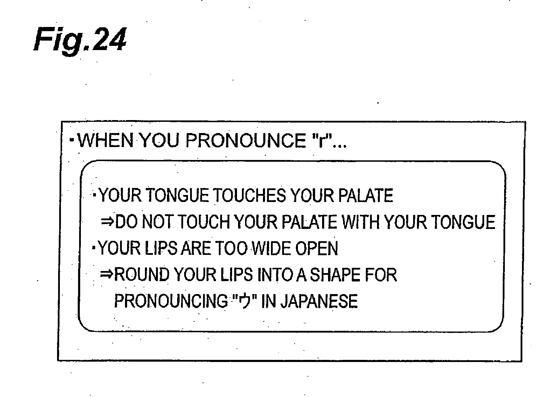

Similarly, as the example shown in Fig. 24, a method of displaying a diagnosis result may be employed to display a combination of the diagnosis result and the correction content by displaying the incorrectly pronounced articulatory attribute together with the correction method. Moreover, similar to displaying the diagnosis result, there are means for displaying the condition of the articulatory organs to be corrected using still images, such as sketches and photographs, or moving images, such as animation and video, and for providing instruction using sound (synthesized sound or recorded sound).

As described above, the articulatory attribute DB 28, the word-segment composition DB 30, the threshold value DB 32, the feature axis DB 34, and the correction-content DB 36, all shown in Fig. 2, can be recorded on a medium, such as a CD-ROM, for each language system, such as British English or American English, so as to be used by the pronunciation diagnosis device 10. In other words, the databases for each language system can be recorded on a single CD-ROM to enable learning in accordance with each language system.

Since the entire pronunciation diagnosis program illustrated in Fig. 3 can also be recorded on a medium, such as a CD-ROM, so as to be used by the pronunciation diagnosis device 10, new language systems and articulatory attribute data can be added.

### Industrial Applicability

As described above, the pronunciation diagnosis device 10 has the following advantages. Using the pronunciation diagnosis device 10, consistent pronunciation correction can be performed regardless of the location, thus enabling a learner to learn a language in privacy at his or her convenience. Since the software is for self-leaming, the software may be used in school education to allow students to study at home to promote their learning experience.

The pronunciation diagnosis device 10 specifies the condition of articulatory organs and the articulatory mode and corrects the specific causes. For example, when pronouncing the phoneme "r", the location and method of articulation, such as whether or not the lips are rounded and whether or not the hard palate is flapped as in pronouncing "ra" in Japanese, can be specified. In this way, the pronunciation diagnosis device 10 is particularly advantageous in learning the pronunciation of consonants.

For example, when the word "ray" or "lay" is pronounced as "rei" with a Japanese accent, instead of selecting a word exhibiting the highest correspondence with the pronunciation from an English dictionary, the pronunciation diagnosis device 10 can determine the differences in the condition of the articulatory organs and the articulatory mode (for example, the position and shape of the tongue and the vocal cord, the shape of the lips, the opening of the mouth, and the method of creating sound) and provides the learner with specific instructions for correcting his or her pronunciation.

The pronunciation diagnosis device 10 enables pronunciation training for all languages since it is capable to predict the sound of words that might be pronounced incorrectly and the articulatory state of the sound on the basis of comparison of conventional distinctive features of speaker's native language and the language to be learned, predict the condition of the oral cavity of the articulatory features on the basis of audio analysis and acoustic analysis of the articulatory distinctive feature performed, and design points that can be used to point out the differences.

Since the pronunciation diagnosis device 10 can reconstruct the specific condition of the oral cavity when a sound is generated, acquisition of multiple languages, and training and self-leaming for language therapy are possible without the presence of special trainers.

Since the pronunciation diagnosis device 10 can describe and correct specific conditions of the oral cavity to the speaker, learners can carry on their learning process without feeling frustration in not being able to improve their learning process.

Since the pronunciation diagnosis device 10 allows learners of a foreign language, such as English, to notice their own pronunciation habits and provides a correction method when a pronunciation is incorrect, learners can repeatedly practice the correct pronunciation. Therefore, pronunciation can be learned efficiently in a short period, compared with other pronunciation learning methods using conventional audio recognition techniques, and, additionally, low-stress learning is possible since a correction method is provided immediately.

Since the pronunciation diagnosis device 10 can clarify the correlation of specific factors of the oral cavity, such as the condition of the articulatory organs and the articulatory mode, that cause the phonemes with the sound of the phonemes, the condition of the oral cavity can be reconstructed on the basis of a database corresponding to the sound. In this way, the oral cavity of the speaker can be three-dimensionally displayed on a screen.

Since pronunciation diagnosis device 10 can handle not only words but also sentences and paragraphs as a single continuous set of audio time-series data, pronunciation diagnosis of long text is possible.

## Claims

1. A pronunciation diagnosis device comprising:
articulatory attribute data including articulatory attribute values corresponding to an articulatory attribute of a desirable pronunciation for each phoneme in each audio language system, the articulatory attribute including any one condition of articulatory organs selected from the height, position, shape, and movement of the tongue, the shape, opening, and movement of the lips, the condition of the glottis, the condition of the vocal cord, the condition of the uvula, the condition of the nasal cavity, the positions of the upper and lower teeth, the condition of the jaws, and the movement of the jaws, or a combination including at least one of the conditions of the articulatory organs; the way of applying force in the conditions of articulatory organs; and a combination of breathing conditions;
extracting means for extracting an acoustic feature from an audio signal generated by a speaker, the acoustic feature being a frequency feature quantity, a sound volume, and a duration time, a rate of change or change pattern thereof, and at least one combination thereof;
attribute-value estimating means for estimating an attribute value associated with the articulatory attribute on the basis of the extracted acoustic feature; and
diagnosing means for diagnosing the pronunciation of the speaker by comparing the estimated attribute value with the desirable articulatory attribute data.

2. The pronunciation diagnosis device according to Claim 1, further comprising:
outputting means for outputting a pronunciation diagnosis result of the speaker.

3. A pronunciation diagnosis device comprising:
acoustic-feature extracting means for extracting an acoustic feature of a phoneme of a pronunciation, the acoustic feature being a frequency feature quantity, a sound volume, a duration time, a rate of change or change pattern thereof, and at least one combination thereof;
articulatory-attribute-distribution forming means for forming a distribution, for each phoneme in each audio language system, according to the extracted acoustic feature of the phoneme, the distribution being formed of any one of the height, position, shape, and movement of the tongue, the shape, opening, and movement of the lips, the condition of the glottis, the condition of the vocal cord, the condition of the uvula, the condition of the nasal cavity, the positions of the upper and lower teeth, the condition of the jaws, and the movement of the jaws, a combination including at least one of the conditions of these articulatory organs, the way of applying force during the conditions of these articulatory organs, or a combination of breathing conditions; and
articulatory-attribute determining means for determining an articulatory attribute categorized by the articulatory-attribute-distribution forming means on the basis of a threshold value.

4. A pronunciation diagnosis device comprising:
acoustic-feature extracting means for extracting an acoustic feature of phonemes of similar pronunciations, the acoustic feature being a frequency feature quantity, a sound volume, and a duration time, a rate of change or change pattern thereof, and at least one combination thereof;
first articulatory-attribute-distribution forming means for forming a first distribution, for each phoneme in each audio language system, according to the extracted acoustic feature of one of the phonemes, the first distribution being formed of any one of the height, position, shape, and movement of the tongue, the shape, opening, and movement of the lips, the condition of the glottis, the condition of the vocal cord, the condition of the uvula, the condition of the nasal cavity, the positions of the upper and lower teeth, the condition of the jaws, and the movement of the jaws, or a combination including at least one of the conditions of these articulatory organs, the way of applying force during the conditions of these articulatory organs, or a combination of breathing conditions as articulatory attributes for pronouncing the one of phonemes;
second articulatory-attribute-distribution forming means for forming a second distribution according to the extracted acoustic feature of the other of the phonemes by a speaker, the second distribution being formed of any one of the height, position, shape, and movement of the tongue, the shape, opening, and movement of the lips, the condition of the glottis, the condition of the vocal cord, the condition of the uvula, the condition of the nasal cavity, the positions of the upper and lower teeth, the condition of the jaws, and the movement of the jaws, a combination including at least one of the conditions of these articulatory organs, the way of applying force during the conditions of these articulatory organs, or a combination of breathing conditions;
first articulatory-attribute determining means for determining an articulatory attribute categorized by the first articulatory-attribute-distribution forming means on the basis of a first threshold value; and
second articulatory-attribute determining means for determining an articulatory attribute categorized by the second articulatory-attribute-distribution forming means on the basis of a second threshold value.

5. The pronunciation diagnosis device according to Claim 3 or 4, further comprising:
threshold-value changing means for changing the threshold value.

6. The pronunciation diagnosis device according to Claim 1, 3 or 4, wherein the phoneme comprises a consonant.

7. A method of diagnosing pronunciation, comprising:
an extracting step of extracting an acoustic feature from an audio signal generated by a speaker, the acoustic feature being a frequency feature quantity, a sound volume, and a duration time, a rate of change or change pattern thereof, and at least one combination thereof;
an attribute-value estimating step of estimating an attribute value associated with the articulatory attribute on the basis of the extracted acoustic feature;
a diagnosing step of diagnosing the pronunciation of the speaker by comparing the estimated attribute value with articulatory attribute data including articulatory attribute values corresponding to an articulatory attribute of a desirable pronunciation for each phoneme in each audio language system, the articulatory attribute including any one condition of articulatory organs selected from the height, position, shape, and movement of the tongue, the shape, opening, and movement of the lips, the condition of the glottis, the condition of the vocal cord, the condition of the uvula, the condition of the nasal cavity, the positions of the upper and lower teeth, the condition of the jaws, and the movement of the jaws, or a combination including at least one of the conditions of the articulatory organs; the way of applying force in the conditions of articulatory organs; and a combination of breathing conditions as articulatory attributes for pronouncing the phoneme; and
an outputting step of outputting a pronunciation diagnosis result of the speaker.

8. A method of diagnosing pronunciation, comprising:
an acoustic-feature extracting step of extracting at least one combination of an acoustic feature of a phoneme of a pronunciation, the acoustic feature being a frequency feature quantity, a sound volume, a duration time, and a rate of change or change pattern thereof;
an articulatory-attribute-distribution forming step of forming a distribution, for each phoneme in each audio language system, according to the extracted acoustic feature of the phoneme, the distribution being formed of any one of the height, position, shape, and movement of the tongue, the shape, opening, and movement of the lips, the condition of the glottis, the condition of the vocal cord, the condition of the uvula, the condition of the nasal cavity, the positions of the upper and lower teeth, the condition of the jaws, and the movement of the jaws, a combination including at least one of the conditions of these articulatory organs, the way of applying force during the conditions of these articulatory organs, or a combination of breathing conditions as articulatory attributes for pronouncing the phoneme; and
an articulatory-attribute determining step of determining an articulatory attribute categorized by the articulatory-attribute-distribution forming means on the basis of a threshold value.

9. A method of diagnosing pronunciation, comprising:
an acoustic-feature extracting step of extracting an acoustic feature of phonemes of similar pronunciations, the acoustic feature being a frequency feature quantity, a sound volume, and a duration time, a rate of change or change pattern thereof, and at least one combination thereof;
an first articulatory-attribute-distribution forming step of forming a first distribution, for each phoneme in each audio language system, according to the extracted acoustic feature of one of the phonemes, the first distribution being formed of any one of the height, position, shape, and movement of the tongue, the shape, opening, and movement of the lips, the condition of the glottis, the condition of the vocal cord, the condition of the uvula, the condition of the nasal cavity, the positions of the upper and lower teeth, the condition of the jaws, and the movement of the jaws, or a combination including at least one of the conditions of these articulatory organs, the way of applying force during the conditions of these articulatory organs, or a combination of breathing conditions as articulatory attributes for pronouncing the one of phonemes;
a second articulatory-attribute-distribution forming step of forming a second distribution according to the extracted acoustic feature of the other of the phonemes by a speaker, the second distribution being formed of any one of the height, position, shape, and movement of the tongue, the shape, opening, and movement of the lips, the condition of the glottis, the condition of the vocal cord, the condition of the uvula, the condition of the nasal cavity, the positions of the upper and lower teeth, the condition of the jaws, and the movement of the jaws, a combination including at least one of the conditions of these articulatory organs, the way of applying force during the conditions of these articulatory organs, or a combination of breathing conditions;
a first articulatory-attribute determining step of determining an articulatory attribute categorized by the first articulatory-attribute-distribution forming means on the basis of a first threshold value; and
a second articulatory-attribute determining step of determining an articulatory attribute categorized by the second articulatory-attribute-distribution forming means on the basis of a second threshold value.

10. The method of diagnosing pronunciation according to Claim 8 or 9, further comprising:
a threshold-value changing step of changing the threshold value.

11. A recording medium for storing, for each audio language system, at least one of an articulatory attribute database including articulatory attributes of each phoneme constituting the audio language system, a threshold value database including threshold values for estimating an articulatory attribute value, a word-segment composition database, a feature axis database, and a correction content database.

12. A recording medium for storing a program for instructing a computer to execute the method according to one of Claims 7, 8, 9, and 10.

13. A computer program for instructing a computer to execute the method according to one of Claims 7, 8, 9, and 10.
